# EUROPÄISCHE PATENTSCHRIFT

(11) **EP 4 484 751 B1**
(45) Veröffentlichungstag und Bekanntmachung des Hinweises auf die Patenterteilung: **07.10.2026**
(21) Anmeldenummer: 24180197.6
(22) Anmeldetag: 05.06.2024
(51) Int. Cl.: F04C 18/02, F04C 29/00

(54) **VERDICHTER UND VORRICHTUNG ZUM STEUERN EINES FLUIDMASSENSTROMS FÜR EINEN VERDICHTER**
COMPRESSOR AND DEVICE FOR CONTROLLING A FLUID MASS FLOW RATE FOR A COMPRESSOR
COMPRESSEUR ET DISPOSITIF DE COMMANDE D'UN DÉBIT MASSIQUE DE FLUIDE POUR UN COMPRESSEUR

(30) Priorität: 20.06.2023 DE 102023116123; 10.04.2024 DE 102024109919
(43) Veröffentlichungstag der Anmeldung: 01.01.2025
(73) Patentinhaber: Hanon Systems, Daejeon 34325 (KR)
(72) Erfinder: Ayhan, Ayar, 50937 Köln (DE); Vondahlen, Gerd, 52538 Gangelt (DE); Stober, Marcel, 50937 Köln (DE)
(74) Vertreter: Löbl, Stefan

(56) Entgegenhaltungen:
- DE-A1- 102016 105 302
- DE-A1- 102021 122 949
- US-A1- 2010 158 710

## Beschreibung

Die Erfindung betrifft eine Vorrichtung zum Steuern eines Fluidmassenstroms als Steuerstrom für eine Vorrichtung zum Verdichten eines gasförmigen Fluids, insbesondere ein Regelventil für einen Scrollverdichter. Die Vorrichtung zum Steuern des Steuermassenstroms weist ein Gehäuse mit auf unterschiedlichen Druckniveaus beaufschlagten Fluidanschlüssen und ein innerhalb des Gehäuses entlang einer Längsachse translatorisch bewegbares Verschlusselement mit den Fluidanschlüssen zugeordneten Wirkflächen auf. Das Verschlusselement ist derart ausgebildet, einen Strömungsquerschnitt eines sich zwischen einem ersten Fluidanschluss und einem zweiten Fluidanschluss erstreckenden Strömungspfades zu regeln.

Die Erfindung betrifft zudem eine Vorrichtung zum Verdichten eines gasförmigen Fluids, insbesondere einen Scrollverdichter zum Verdichten eines Kältemittels, welche ein Gehäuse mit einer Gegenwandung und einen Verdichtungsmechanismus mit einer unbeweglichen, feststehenden Spirale sowie einer über einen Exzenterantrieb angetriebenen beweglichen, orbitierenden Spirale aufweist. Der Scrollverdichter wird auch als Spiralverdichter bezeichnet.

Aus dem Stand der Technik bekannte Verdichter für mobile Anwendungen, insbesondere für Klimatisierungssysteme von Kraftfahrzeugen, zum Fördern von Kältemittel durch einen Kältemittelkreislauf, auch als Kältemittelverdichter bezeichnet, werden unabhängig vom Kältemittel oft als Kolbenverdichter mit variablem Hubvolumen oder als Scrollverdichter ausgebildet. Die Verdichter werden dabei entweder über eine Riemenscheibe oder elektrisch angetrieben.

Herkömmliche Scrollverdichter weisen neben einem Gehäuse, eine unbewegliche, feststehende Spirale mit einer scheibenförmigen Grundplatte und einer sich von einer Seite der Grundplatte erstreckenden, spiralförmigen Wandung sowie eine bewegliche, orbitierende Spirale ebenfalls mit einer scheibenförmigen Grundplatte und einer sich von einer Vorderseite der Grundplatte erstreckenden, spiralförmigen Wandung auf. Dabei sind die Grundplatten derart zueinander angeordnet, dass die spiralförmigen Wandungen in axialer Richtung ineinandergreifen.

Die feststehende Spirale und die orbitierende Spirale wirken zusammen. Dabei wird die orbitierende Spirale mittels eines Exzenterantriebs auf einer kreisförmigen Bahn derart bewegt, dass sich die spiralförmigen Wandungen an mehreren Stellen berühren und zwischen den Wandungen und den Grundplatten mehrere aufeinanderfolgende, abgeschlossene Arbeitsräume ausgebildet sind. Die Volumina benachbart angeordneter Arbeitsräume sind unterschiedlich groß. Infolge der Bewegung der orbitierenden Spirale relativ zur feststehenden Spirale werden die Volumina und die Positionen der Arbeitsräume derart verändert, dass die Volumina der Arbeitsräume zur Mitte der spiralförmigen Wandungen hin zunehmend kleiner werden und ein innerhalb der Arbeitsräume eingeschlossenes gasförmiges Fluid verdichtet wird. Das derart verdichtete Fluid wird durch mindestens einen Auslass aus dem Verdichtungsmechanismus ausgelassen. Der damit verbundene Anstieg des Drucks in benachbart angeordneten Arbeitsräumen verursacht eine auf die orbitierende Spirale, vorwiegend in axialer Richtung, wirkende Kraft, welche zudem außermittig auf die orbitierende Spirale einwirkt und derart ein Kippmoment erzeugt.

Zudem sollten für eine ausreichende innere Dichtheit in axialer Richtung ausgebildete Spalte zwischen der feststehenden Spirale und der orbitierenden Spirale minimal sein, was auch in Verbindung mit einem Anpressen der orbitierenden Spirale an die feststehende Spirale gewährleistet wird.

Die zum Stand der Technik gehörenden Scrollverdichter weisen dabei eine innerhalb des Gehäuses angeordnete und fest mit dem Gehäuse verbundene Wandung auf, welche als Begrenzung eines Gegendruckbereichs ausgebildet ist und folglich auch als Gegenwandung bezeichnet wird. Aufgrund des innerhalb des zwischen der Gegenwandung und der orbitierenden Spirale, insbesondere einer Rückseite der Grundplatte der orbitierenden Spirale, ausgebildeten Gegendruckbereichs, auch als Gegendruckkammer bezeichnet, vorherrschenden Gegendrucks wird die orbitierende Spirale mit einer in axialer Richtung wirkenden Kraft gegen die, ebenso wie die Gegenwandung am Gehäuse fixierte, feststehende Spirale gedrückt. Die in der axialen Richtung wirkende Druckkraft wird durch den innerhalb des Gegendruckbereichs vorherrschenden Gegendruck, auch als Anpressdruck bezeichnet, geregelt. Dabei liegt das Niveau des Anpressdrucks als ein Zwischendruck beziehungsweise Mitteldruck zwischen den Niveaus des Hochdrucks als Auslassdruck und des Niederdrucks als Saugdruck des Verdichters. Der Wert des Anpressdrucks ist derart einzustellen, dass einerseits die axialen Dichtflächen zwischen orbitierender Spirale und feststehender Spirale geschlossen sind und anderseits eine übermäßige, Verschleiß verursachende Reibung zwischen der feststehenden Spirale und der orbitierenden Spirale vermieden wird.

Die mit Hochdruck und Gegendruck sowie mit Gegendruck und Niederdruck beaufschlagten Bereiche des Verdichters können jeweils über Strömungskanäle mit integrierten Expansionsvorrichtungen miteinander verbunden sein. Durch die Strömungskanäle strömt ein sehr begrenzter Massenstrom des im Verdichter verdichteten Fluids beziehungsweise eines Gemisches aus dem Fluid und Öl als Schmiermittel des Verdichters, welcher auch als Steuermassenstrom bezeichnet wird. Herkömmliche Expansionsvorrichtungen sind jeweils als Düsen ausgebildet. Dabei kann zumindest eine Expansionsvorrichtung auch als ein federbelastetes mechanisches Regelventil ausgebildet sein.

Aus der DE 10 2016 105 302 A1 geht ein Steuerstromregelventil für Spiralverdichter in Klimatisierungssystemen für Kraftfahrzeuge hervor. Das Steuerstromregelventil weist ein Gehäuse und ein innerhalb des Gehäuses angeordnetes Verschlusselement zum Einstellen des Steuerstroms auf. Das Gehäuse ist mit Fluidanschlüssen für den Hochdruck, den Gegendruck und den Saugdruck sowie den Umgebungsdruck ausgebildet. Das Verschlusselement für den Steuerstrom weist den jeweiligen Fluidanschlüssen zugeordnete Wirkflächen auf. Dabei wirkt eine aus den am Verschlusselement anliegenden Drücken resultierende Kraft auf das Verschlusselement derart ein, dass von einem mit Fluid auf Hochdruck beaufschlagten Bereich zu einem mit Fluid auf Saugdruck beaufschlagten Bereich ein Gegendruck erzeugender Steuerstrom strömt. Zudem ist ein fluiddichter, mit Umgebungsdruck beaufschlagter Bereich ausgebildet, welcher mittels einer an das metallische Verschlusselement angeschweißten Blechmembran oder anvulkanisierten Membran abgedichtet ist. Innerhalb des Gehäuses ist zudem ein Federelement zum Erzeugen einer zusätzlichen, auf das Verschlusselement wirkenden Kraft angeordnet.

Das Kräftegleichgewicht am Verschlusselement und die Stellung des Verschlusselements zum Erreichen einer erforderlichen Regelkurve des Gegendrucks abhängig von dem Hochdruck und dem Saugdruck beziehungsweise Niederdruck, wird durch die an den Wirkflächen anliegenden Drücke sowie den Durchfluss durch eine vom Verschlusselement freigegebene Durchlassöffnung beeinflusst.

Das Steuerstromregelventil weist zwei Elastomermembrane auf, welche auf der Niederdruckseite und der Gegendruckseite ausgebildet sind. Die Elastizität der Elastomermembrane ermöglicht eine axiale Beweglichkeit des Verschlusselements innerhalb des Gehäuses. Die Elastomermembrane begrenzen einen Bereich des Steuerstromregelventils in axialer Richtung, welcher aufgrund einer Verbindung zum Umgebungsdruck einen vom Niederdruck und vom Gegendruck unabhängigen atmosphärischen Druck aufweist. Mit den Elastomermembranen ist zwischen der Niederdruckseite und der Gegendruckseite eine fluiddichte und druckdichte Barriere ausgebildet. Die fluiddichte Anbindung der Elastomermembrane wird durch Anvulkanisieren an dem umliegenden Gehäuse oder dem Verschlusselement gewährleistet.

Die aus dem Stand der Technik bekannten Vorrichtungen zum Steuern eines Fluidmassenstroms als Steuerstrom, insbesondere für eine Vorrichtung zum Verdichten eines gasförmigen Fluids, weisen eine große Anzahl, in einer komplexen Struktur miteinander verbundene Komponenten auf, was eine hohe Komplexität bei der Montage mit einer hohen Anzahl an Montageschritten und damit hohe Montagekosten verursacht. So sind beispielsweise mehrere Dichtungen erforderlich, um verschiedene Druckstufen voneinander zu trennen. Zudem birgt die große Anzahl der Komponenten eine hohe Gefahr an Fehlern während des Montageprozesses. Des Weiteren ist beispielsweise das Anvulkanisieren der Membrane aus einem Elastomer an Metall sehr aufwändig und komplex sowie insbesondere für Hochdruckanwendungen, wie bei Systemen für Kohlenstoffdioxid als Fluid, ungeeignet. Das Abdichten mit anvulkanisierten Membranen bewirkt zudem eine hohe Permeationsfläche, was über eine Gesamtbetriebsdauer zu einem sehr hohen Austritt des Fluids in die Umgebung und damit einem sehr hohen Verlust des Fluids führen kann.

Um die Vorrichtung, speziell das Verschlusselement, auf den entsprechenden Arbeitspunkt einzustellen und eine hohe Reproduzierbarkeit zu erreichen, ist der Dichtsitz zu prägen. Dabei wird beim Prägen mittels einer Presse eine definierte Kraft auf das Verschlusselement aufgebracht, sodass sich am Gehäuse durch plastische Verformung des Materials ein entsprechender Dichtsitz ausbildet. Der Prägevorgang besteht meist aus einer Iteration von Prägeschritten und Testen, bis ein gewünschtes Druckniveau eingeregelt wird, und dient beispielsweise gemäß der DE 10 2016 105 302 A1 zum Einstellen einer Distanz zwischen dem Verschlusselement und den Elastomermembranen, um durch Auslengung auftretende Spannungen der Elastomermembrane zu eliminieren.

Die Aufgabe der Erfindung besteht im Bereitstellen einer Vorrichtung zum Steuern eines Fluidmassenstroms als Steuerstrom für eine Vorrichtung zum Verdichten eines gasförmigen Fluids, insbesondere um einen störungsfreien Betrieb mit maximaler Lebensdauer der Vorrichtung zum Verdichten des Fluids zu gewährleisten. Die Vorrichtung soll eine minimale Anzahl an Einzelkomponenten aufweisen und konstruktiv einfach realisierbar sein, auch, um den Montageaufwand und die Kosten bei der Montage zu minimeren. Die Vorrichtung soll fluiddicht ausgebildet sein, um die Leckage beziehungsweise den Austritt von Fluid in die Umgebung und damit den Verlust an Fluid aus einem System zu verhindern.

Die Aufgabe wird durch die Gegenstände mit den Merkmalen der selbstständigen Patentansprüche gelöst. Weiterbildungen sind in den abhängigen Patentansprüchen angegeben.

Die Aufgabe wird durch eine erfindungsgemäße Vorrichtung zum Steuern eines Fluidmassenstroms als ein Steuerstrom für eine Vorrichtung zum Verdichten eines gasförmigen Fluids von einem Niveau eines Niederdrucks auf ein Niveau eines Hochdrucks gelöst. Die Vorrichtung zum Steuern eines Fluidmassenstroms weist ein Gehäuse mit auf unterschiedlichen Druckniveaus beaufschlagten Fluidanschlüssen und ein innerhalb des Gehäuses entlang einer Längsachse translatorisch bewegbar angeordnetes Verschlusselement mit den Fluidanschlüssen zugeordneten Wirkflächen auf. Das Verschlusselement ist dabei derart ausgebildet, einen Strömungsquerschnitt eines sich zwischen einem ersten Fluidanschluss und einem zweiten Fluidanschluss erstreckenden Strömungspfades zu regeln.

Nach der Konzeption der Erfindung weist die Vorrichtung ein Aufnahmeelement zur Aufnahme des Verschlusselements auf. Ein Primärsegment ist als ein erster Abschnitt des Verschlusselements vom Aufnahmeelement und ein Sekundärsegment ist als ein zweiter Abschnitt des Verschlusselements vom Gehäuse jeweils vollumfänglich umschlossen. Zudem ist das Aufnahmeelement vom Gehäuse vollumfänglich umschlossen. Dabei sind das Sekundärsegment des Verschlusselements über mindestens ein erstes Dichtelement zum Gehäuse und das Primärsegment des Verschlusselements über mindestens ein zweites Dichtelement zum Aufnahmeelement sowie das Aufnahmeelement über mindestens ein drittes Dichtelement zum Gehäuse jeweils fluiddicht und druckdicht abgedichtet.

Das Verschlusselement ist mit dem Primärsegment und dem Sekundärsegment vorteilhaft als eine zusammenhängende Einheit einstückig ausgebildet. Das Verschlusselement und das Aufnahmeelement können dabei jeweils eine metallische oder eine nichtmetallische Komponente sein. Die Dichtelemente sind vorzugsweise jeweils als eine O-Ring-Dichtung ausgebildet.

Nach einer Weiterbildung der Erfindung sind der erste Fluidanschluss des Gehäuses mit dem Fluid auf einem Niveau eines Gegendrucks und der zweite Fluidanschluss des Gehäuses mit dem Fluid auf dem Niveau des Hochdrucks beaufschlagt, während ein dritter Fluidanschluss des Gehäuses mit dem Fluid auf dem Niveau des Niederdrucks beaufschlagt ist. Dabei stellt das Niveau des Gegendrucks ein Zwischendruckniveau zwischen dem Niveau des Niederdrucks und dem Niveau des Hochdrucks des Fluids dar. Ein vierter Fluidanschluss des Gehäuses ist vorzugsweise mit einem Niveau des Umgebungsdrucks, insbesondere der Umgebungsluft, beaufschlagt.

Das Verschlusselement ist konzeptionsgemäß zylinderförmig, insbesondere kreiszylinderförmig, mit Abschnitten unterschiedlicher Außendurchmesser ausgebildet, sodass das Verschlusselement zwischen benachbarten Abschnitten Abstufungen aufweist. Dabei bildet das Verschlusselement an einer ersten Stirnseite, insbesondere einer Stirnseite des Primärsegments, mit dem Aufnahmeelement einen Dichtsitz aus. Zudem ist ein vom Gehäuse und einer zur ersten Stirnseite distalen zweiten Stirnseite des Verschlusselements, insbesondere einer Stirnseite des Sekundärsegments, begrenztes Volumen mit dem Niveau des Umgebungsdrucks, insbesondere mit Umgebungsluft, beaufschlagt und über den vierten Fluidanschluss des Gehäuses mit der Umgebung verbunden.

Nach einer vorteilhaften Ausgestaltung der Erfindung sind das Primärsegment des Verschlusselements mit einem Primärsegmentdurchmesser und das Sekundärsegment des Verschlusselements mit mindestens zwei Abschnitten mit jeweils unterschiedlichen Außendurchmessern ausgebildet. Dabei können sich jeweils auch der Primärsegmentdurchmesser und die Außendurchmesser des Sekundärsegments des Verschlusselements voneinander unterscheiden.

Nach einer weiteren bevorzugten Ausgestaltung der Erfindung ist ein von dem Gehäuse, dem Aufnahmeelement und dem Verschlusselement mit einer kreisringförmigen Wirkfläche mit einem ersten Außendurchmesser des Verschlusselements und dem Primärsegmentdurchmesser des Verschlusselements als Innendurchmesser begrenztes Volumen mit dem Fluid auf dem Niveau des Niederdrucks beaufschlagt und mit dem dritten Fluidanschluss des Gehäuses verbunden.

Des Weiteren ist vorteilhaft ein von dem Gehäuse und dem Verschlusselement mit einer kreisringförmigen Wirkfläche mit dem ersten Außendurchmesser des Verschlusselements und einem zweiten Außendurchmesser des Verschlusselements als Innendurchmesser begrenztes Volumen mit dem Fluid auf dem Niveau des Gegendrucks beaufschlagt und mit dem ersten Fluidanschluss des Gehäuses verbunden.

Nach einer Weiterbildung der Erfindung ist innerhalb des Gehäuses eine erste Fluidverbindung ausgebildet, welche sich vom ersten Fluidanschluss bis zum von dem Gehäuse und dem Verschlusselement mit der kreisringförmigen Wirkfläche mit dem ersten Außendurchmesser des Verschlusselements und dem zweiten Außendurchmesser des Verschlusselements als Innendurchmesser begrenzten Volumen erstreckt.

Innerhalb des Gehäuses kann zudem eine zweite Fluidverbindung vorgesehen sein, welche sich vom ersten Fluidanschluss zum von dem Gehäuse und dem Verschlusselement mit der kreisringförmigen Wirkfläche mit dem ersten Außendurchmesser des Verschlusselements und dem Primärsegmentdurchmesser des Verschlusselements als Innendurchmesser begrenzten Volumen beziehungsweise zum dritten Fluidanschluss des Gehäuses erstreckt. Die zweite Fluidverbindung ist vorteilhaft mit einem Expansionselement, insbesondere einem Drosselorgan, ausgebildet.

Die Vorrichtung zum Steuern des Fluidmassenstroms als Steuerstrom ist vorteilhaft derart konfiguriert, dass die translatorische Bewegung des Verschlusselements innerhalb des Gehäuses und des Aufnahmeelements ausschließlich auf an den Wirkflächen des Verschlusselements wirkenden Drücken und damit auf Druckkräften basiert. Die definierten Druckkräfte beziehungsweise Kolbenkräfte verursachen die Bewegung des Verschlusselements innerhalb gleitend dichtender, insbesondere als O-Ringe ausgebildeter Dichtelemente.

Die Aufgabe wird auch durch eine erfindungsgemäße Vorrichtung zum Verdichten eines gasförmigen Fluids von einem Niveau eines Niederdrucks auf ein Niveau eines Hochdrucks, insbesondere einen Scrollverdichter zum Verdichten eines Kältemittels, gelöst. Dabei liegt das zu verdichtende Fluid in einem Ansaugbereich auf dem Niveau des Niederdrucks und das verdichtete Fluid in einem Hochdruckbereich, speziell an einem Auslass der Vorrichtung zum Verdichten, auf dem Niveau des Hochdrucks vor. Die Vorrichtung zum Verdichten weist ein Gehäuse mit einer Gegenwandung und einen Verdichtungsmechanismus mit einer unbeweglichen, feststehenden Spirale sowie einer über einen Exzenterantrieb angetriebenen beweglichen, orbitierenden Spirale auf. Das Gehäuse mit der Gegenwandung und die orbitierende Spirale umschließen zumindest bereichsweise gemeinsam eine Gegendruckkammer. Zudem ist ein sich vom Hochdruckbereich zur Gegendruckkammer erstreckender Strömungspfad ausgebildet.

Nach der Konzeption der Erfindung ist innerhalb des sich zwischen dem Hochdruckbereich und der Gegendruckkammer erstreckenden Strömungspfades eine erfindungsgemäße Vorrichtung zum Steuern eines Fluidmassenstroms ausgebildet.

Die vorteilhafte Ausgestaltung der Erfindung ermöglicht die Verwendung der Vorrichtung zum Verdichten des gasförmigen Fluids mit der Vorrichtung zum Steuern eines Fluidmassenstroms als Verdichter in einem Kältemittelkreislauf eines Klimatisierungssystems eines Kraftfahrzeugs. Der Verdichter kann dabei elektrisch oder mechanisch angetrieben ausgebildet sein. Dabei wird der Verdichtungsmechanismus mittels eines Elektromotors oder einer Riemenscheibe angetrieben.

Die erfindungsgemäße Vorrichtung zum Steuern eines Fluidmassenstroms als Steuerstrom für eine Vorrichtung zum Verdichten eines gasförmigen Fluids von einem Niveau eines Niederdrucks auf ein Niveau eines Hochdrucks kann folglich als ein Steuerstromregelventil, insbesondere eines Scrollverdichters eines Kältemittelkreislaufs eines Klimatisierungssystems eines Kraftfahrzeugs, ausgebildet sein.

Die erfindungsgemäße Vorrichtung zum Steuern eines Fluidmassenstroms und die Vorrichtung zum Verdichten eines gasförmigen Fluids mit der erfindungsgemäßen Vorrichtung zum Steuern eines Fluidmassenstroms weisen zusammenfassend weitere diverse Vorteile auf:
- minimale Anzahl an Einzelkomponenten und einfache Konstruktion, dadurch minimaler Montageaufwand, Fertigungsaufwand und Wartungsaufwand sowie minimale Montagekosten, Fertigungskosten und Wartungskosten,
- beispielsweise wird das im Vergleich zum Stand der Technik in der Vorrichtung vorgesehene Federelement nicht benötigt und der Dichtsitz ist ohne einen zusätzlichen Formgebungsschritt in das Aufnahmeelement integriert, sowie
- maximale Funktionssicherheit und Dichtheit durch minimale Anzahl potentieller Leckagepfade zur Umgebung - es ist lediglich eine Dichtstelle zur Umgebung vorhanden, dadurch minimaler Kältemittelaustritt aus der Vorrichtung zum Verdichten.

Weitere Einzelheiten, Merkmale und Vorteile der Erfindung ergeben sich aus der nachfolgenden Beschreibung eines Ausführungsbeispiels mit Bezugnahme auf die zugehörigen Zeichnungen. Es zeigen:
- Fig. 1:: ein Prinzipschaltbild einer Vorrichtung zum Steuern eines Fluidmassenstroms als Steuerstrom für eine Vorrichtung zum Verdichten eines gasförmigen Fluids mit einer radialen Umgebungsdruckbeaufschlagung aus dem Stand der Technik,
- Fig. 2 und 3:: jeweils ein Prinzipschaltbild einer erfindungsgemäßen Vorrichtung zum Steuern eines Fluidmassenstroms als Steuerstrom für eine Vorrichtung zum Verdichten eines gasförmigen Fluids,
- Fig. 4:: die erfindungsgemäße Vorrichtung mit einem Verschlusselement und einem Aufnahmeelement in einer perspektivischen Darstellung und
- Fig. 5:: die Vorrichtung aus Fig. 4 in einer Draufsicht sowie
- Fig. 6:: eine Vorrichtung zum Verdichten eines gasförmigen Fluids mit integrierter Vorrichtung zum Steuern eines Fluidmassenstroms als Steuerstrom in einer seitlichen Schnittdarstellung.

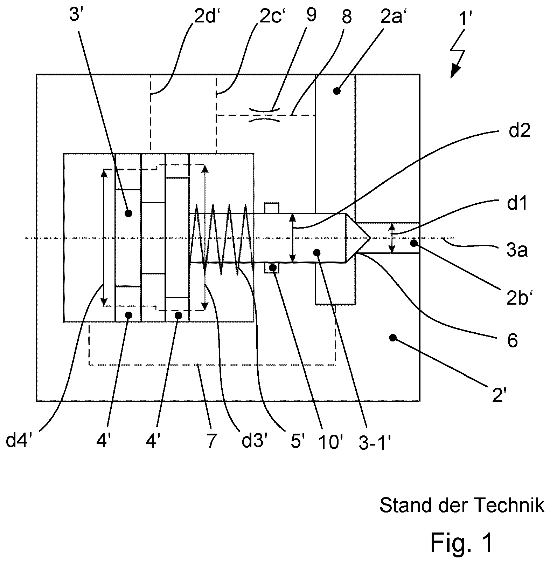

Aus **Fig. 1** geht ein Prinzipschaltbild einer Vorrichtung 1' zum Steuern eines Fluidmassenstroms als Steuerstrom, auch als Steuerstromregelventil bezeichnet, für eine Vorrichtung zum Verdichten eines gasförmigen Fluids von einem Niveau eines Saugdrucks auf ein Niveau eines Hochdrucks mit einer radialen Umgebungsdruckbeaufschlagung aus dem Stand der Technik hervor.

Die Vorrichtung 1' weist ein Gehäuse 2' mit verschiedenen Fluidanschlüssen 2a', 2b', 2c', 2d' auf. Innerhalb des Gehäuses 2' ist ein Verschlusselement 3' entlang einer Längsachse 3a, welche einer Symmetrieachse des Verschlusselements 3' entspricht, translatorisch bewegbar angeordnet. Die Vorrichtung 1' ist mit einem Strömungspfad ausgebildet, welcher sich von einem ersten Fluidanschluss 2a' bis zu einem zweiten Fluidanschluss 2b' erstreckt und dessen Strömungsquerschnitt mittels des Verschlusselements 3' regelbar ist. Dabei wird mittels des Verschlusselements 3' ein Steuerstrom des Fluids von einem Niveau des Hochdrucks am zweiten Fluidanschluss 2b' auf ein Niveau eines Gegendrucks am ersten Fluidanschluss 2a' geregelt.

Zudem weist das Gehäuse 2' einen dritten Fluidanschluss 2c' mit dem Fluid auf einem Niveau des Saugdrucks der Vorrichtung zum Verdichten des Fluids, auch als Niveau des Niederdrucks bezeichnet, sowie einen vierten Fluidanschluss 2d' mit einem Niveau des Umgebungsdrucks auf. Dabei bilden der dritte Fluidanschluss 2c' und der vierte Fluidanschluss 2d' jeweils keinen Strömungspfad aus. Der dritte Fluidanschluss 2c' und der vierte Fluidanschluss 2d' dienen dem Übertragen der Niveaus des Saugdrucks und des Umgebungsdrucks auf entsprechende Wirkflächen des Verschlusselements 3'.

Zwischen dem Verschlusselement 3' und dem Gehäuse 2' sind Membrandichtelemente 4' angeordnet, welche einen Bereich der Vorrichtung 1' in Richtung der Längsachse 3a begrenzen und die Vorrichtung 1' zum Umgebungsdruck abdichten. Der von den Membrandichtelementen 4' begrenzte Bereich weist aufgrund einer Verbindung zum Niveau des Umgebungsdrucks einen vom Niederdruck und vom Gegendruck unabhängigen atmosphärischen Druck auf. Die Membrandichtelemente 4' bilden in Kombination eine fluiddichte und druckdichte Barriere zwischen der mit dem dritten Fluidanschluss 2c' verbundenen Niederdruckseite und der mit dem ersten Fluidanschluss 2a' verbundenen Gegendruckseite aus.

Aufgrund der zwischen dem Verschlusselement 3' und dem Gehäuse 2' jeweils als eine geschweißte Blechmembran oder eine anvulkanisierte Membran ausgebildeten Membrandichtelemente 4' besteht ein hohes Risiko an Leckage und damit die Gefahr, dass Fluid über den vierten Fluidanschluss 2d' in die Umgebung ausströmt. Die Vorrichtung 1' weist dabei vier potenzielle Leckagepfade für das Fluid in die Umgebung auf. Die jeweils aus einem Elastomer ausgebildeten Membrandichtelemente 4' sind am Verschlusselement 3' anvulkanisiert.

**In** einer in Fig. 1 gezeigten Schließstellung der Vorrichtung 1' liegt das Verschlusselement 3' an einem am Gehäuse 2' ausgebildeten Dichtsitz 6 mit einem Dichtsitzdurchmesser d1 an. Der Dichtsitz 6 ist zwischen dem ersten Fluidanschluss 2a' und dem zweiten Fluidanschluss 2b' ausgebildet. Der sich zwischen den Fluidanschlüssen 2a', 2b' erstreckende Strömungspfad ist geschlossen. Bei einer von der Schließstellung abweichenden Stellung der Vorrichtung 1' strömt das Fluid vom zweiten Fluidanschluss 2b' zum ersten Fluidanschluss 2a' durch den Strömungspfad. Dabei wird mit dem geregelten, engen Dichtsitz 6 ein Strömungswiderstand erzeugt, welcher einen Druckverlust des Fluids bewirkt.

Die Vorrichtung 1' weist zudem ein Federelement 5' auf, welches mit einer entgegen der Schließstellung des Verschlusselements 3' ausgerichteten Federkraft auf das Verschlusselement 3' einwirkend angeordnet ist. Das Federelement 5' ist folglich für ein Öffnen der Vorrichtung 1', insbesondere des sich zwischen dem ersten Fluidanschluss 2a' und dem zweiten Fluidanschluss 2b' erstreckenden Strömungspfades, ausgebildet, wenn die auf das Verschlusselement 3' aufgrund der unterschiedlichen Drücke einwirkenden Kräfte ausgeglichen sind.

Das Verschlusselement 3' liegt mit einer in Richtung der Längsachse 3a ausgerichteten freien Stirnseite eines Primärsegments 3-1' den sich zwischen dem ersten Fluidanschluss 2a' und dem zweiten Fluidanschluss 2b' erstreckenden Strömungspfad verschließend am Dichtsitz 6 an. Das Primärsegment 3-1' des Verschlusselements 3' wirkt mit dem Dichtsitz 6 und dem zweiten Fluidanschluss 2b' zusammen.

Das Verschlusselement 3' ist geometrisch derart ausgebildet, dass ein Primärsegmentdurchmesser d2, der Dichtsitzdurchmesser d1, ein erster Wirkdurchmesser d3' des Niveaus des Saugdrucks zum Niveau des Umgebungsdrucks und ein zweiter Wirkdurchmesser d4' des Niveaus des Gegendrucks zum Niveau des Umgebungsdrucks derart konfiguriert sind, dass eine resultierende Kraft abhängig von den jeweils anliegenden Druckniveaus auf das Verschlusselement 3' einwirkt und damit den Steuerstrom des Fluids vom zweiten Fluidanschluss 2b' zum ersten Fluidanschluss 2a' steuert. Durch ein Kräftegleichgewicht wird das Verschlusselement 3' jeweils in die entsprechende Position verbracht.

Die Vorrichtung 1' ist zudem mit einer ersten Fluidverbindung 7 ausgebildet, welche sich vom ersten Fluidanschluss 2a' bis zu einem vom Verschlusselement 3', insbesondere einer Wirkfläche mit dem zweiten Wirkdurchmesser d4' des Niveaus des Gegendrucks zum Niveau des Umgebungsdrucks, und dem Gehäuse 2' umschlossenen Volumen erstreckt, um das Niveau des Gegendrucks entsprechend in das Kräftegleichgewicht am Verschlusselement 3' einzubeziehen. Zudem ist eine zweite Fluidverbindung 8 vorgesehen, welche den ersten Fluidanschluss 2a' mit dem dritten Fluidanschluss 2c' verbindet und sich zwischen dem ersten Fluidanschluss 2a' und einem vom Verschlusselement 3', insbesondere einer Wirkfläche mit dem ersten Wirkdurchmesser d3' des Niveaus des Saugdrucks zum Niveau des Umgebungsdrucks, und dem Gehäuse 2' umschlossenen Volumen erstreckt. Innerhalb der zweiten Fluidverbindung 8 ist ein Expansionselement 9, speziell ein Drosselelement beziehungsweise eine Drossel, angeordnet.

Das Primärsegment 3-1' des Verschlusselements 3' ist mittels eines als O-Ring ausgebildeten Dichtelements 10' zum Gehäuse 2' abgedichtet.

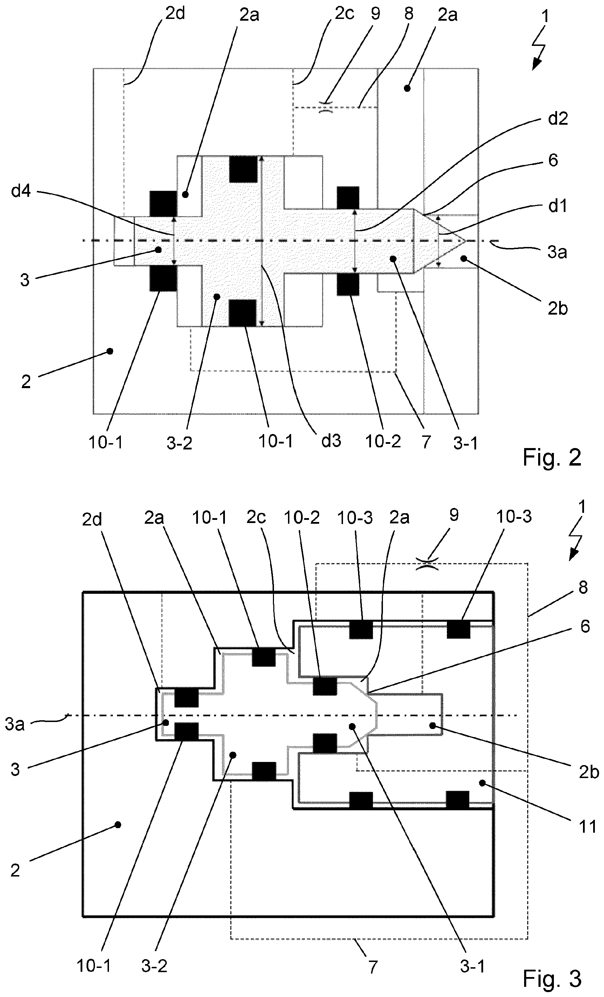

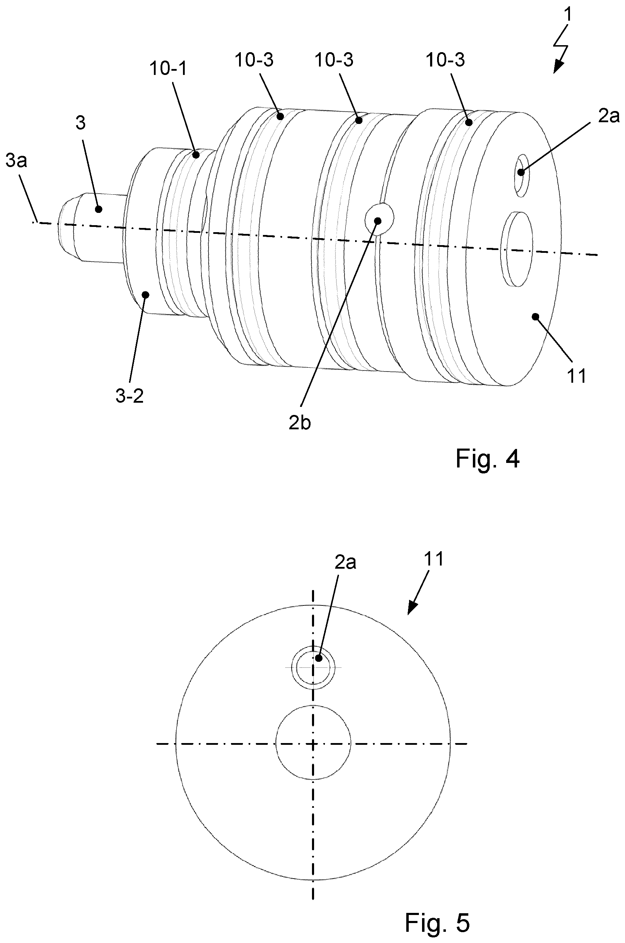

In den **Fig. 2 und 3** ist jeweils ein Prinzipschaltbild einer erfindungsgemäßen Vorrichtung 1 zum Steuern eines Fluidmassenstroms als Steuerstrom für eine Vorrichtung zum Verdichten eines gasförmigen Fluids vom Niveau des Saugdrucks auf das Niveau des Hochdrucks mit einer axialen Umgebungsdruckbeaufschlagung an einer Stirnseite eines kolbenförmigen Verschlusselements 3 innerhalb eines Gehäuses 2 gezeigt, während die erfindungsgemäße Vorrichtung 1 in **Fig. 4** mit dem Verschlusselement 3 und einem Aufnahmeelement 11 in einer perspektivischen Darstellung und in **Fig. 5** in einer Draufsicht auf das Aufnahmeelement 11 jeweils ohne das Gehäuse 2 gezeigt ist. Die im Vergleich zur in Fig. 1 dargestellten Vorrichtung 1' aus dem Stand der Technik gleichen Komponenten sind jeweils mit gleichen Bezugszeichen versehen.

Die Vorrichtung 1 weist das Gehäuse 2 mit verschiedenen Fluidanschlüssen 2a, 2b, 2c, 2d auf. Unter den Fluidanschlüssen 2a, 2b, 2c, 2d sind ebenso in den Komponenten der Vorrichtung 1 ausgebildete Strömungskanäle zu verstehen. Das Verschlusselement 3 und das in Fig. 2 nicht dargestellte Aufnahmeelement 11 für das Verschlusselement 3 sind innerhalb des Gehäuses 2 integriert.

Das jeweils bereichsweise innerhalb des Gehäuses 2 und des Aufnahmeelements 11 angeordnete Verschlusselement 3 ist entlang der Längsachse 3a als Symmetrieachse des Verschlusselements 3 translatorisch bewegbar. Das Verschlusselement 3 ist mit einem Primärsegment 3-1 innerhalb des Aufnahmeelements 11 und mit einem Sekundärsegment 3-2 innerhalb des Gehäuses 2 geführt ausgebildet. Dabei ist das Verschlusselement 3 mit dem Primärsegment 3-1 innerhalb des Aufnahmeelements 11 und das Aufnahmeelement 11 innerhalb des Gehäuses 2 angeordnet, während das Verschlusselement 3 mit dem Sekundärsegment 3-2 innerhalb des Gehäuses 2 angeordnet ist.

Das Verschlusselement 3 ist mit dem Primärsegment 3-1 und dem Sekundärsegment 3-2 einstückig in der Form eines Zylinders, insbesondere eines Kreiszylinders, mit Abschnitten unterschiedlicher Außendurchmesser ausgebildet.

Die Vorrichtung 1 weist den sich zwischen dem ersten Fluidanschluss 2a auf Niveau des Gegendrucks und dem zweiten Fluidanschluss 2b auf Niveau des Hochdrucks der Vorrichtung zum Verdichten des gasförmigen Fluids erstreckenden Strömungspfad auf, dessen Strömungsquerschnitt mit der Bewegung des Verschlusselements 3 regelbar ist. Mit dem Verschlusselement 3 wird der Steuerstrom des Fluids geregelt.

Das Verschlusselement 3 liegt gemäß der Fig. 2 und 3 mit der in Richtung der Längsachse 3a ausgerichteten freien ersten Stirnseite den sich zwischen dem ersten Fluidanschluss 2a und dem zweiten Fluidanschluss 2b erstreckenden Strömungspfad verschließend an einem Dichtsitz 6 an. Der Dichtsitz 6 ist im Aufnahmeelement 11 der Vorrichtung 1 ausgebildet. Das Verschlusselement 3 wirkt mit dem Dichtsitz 6 und dem zweiten Fluidanschluss 2b zusammen.

Das Gehäuse 2 weist ebenso den dritten Fluidanschluss 2c mit dem Fluid auf Niveau des Saugdrucks beziehungsweise des Niederdrucks der Vorrichtung zum Verdichten des Fluids sowie den vierten Fluidanschluss 2d mit dem Niveau des Umgebungsdrucks auf. Der dritte Fluidanschluss 2c und der vierte Fluidanschluss 2d dienen lediglich dem Übertragen der Niveaus des Saugdrucks und des Umgebungsdrucks auf entsprechende Wirkflächen des Verschlusselements 3.

Zwischen dem Verschlusselement 3 und dem Gehäuse 2 sind zwei erste Dichtelemente 10-1, zwischen dem Verschlusselement 3 und dem Aufnahmeelement 11 ist ein zweites Dichtelement 10-2 und zwischen dem Aufnahmeelement 11 und dem Gehäuse 2 sind dritte Dichtelemente 10-3 angeordnet, welche jeweils mit unterschiedlichen Drücken beaufschlagte Volumina der Vorrichtung 1 in Richtung der Längsachse 3a begrenzen und zueinander abdichten.

Das kolbenförmige Verschlusselement 3 ist an einer zur ersten, zum Dichtsitz 6 ausgerichteten Stirnseite distalen zweiten Stirnseite mit Umgebungsdruck beaufschlagt. Dabei ist ein durch das Gehäuse 2 und die zweite Stirnseite des Verschlusselements 3 begrenztes Volumen mit Niveau des Umgebungsdrucks beaufschlagt. Das über den vierten Fluidanschluss 2d mit der Umgebung verbundene Volumen weist damit ein vom Niveau des Niederdrucks und vom Niveau des Gegendrucks unabhängiges Druckniveau auf.

In der in den Fig. 2 und 3 dargestellten Schließstellung der Vorrichtung 1 liegt das Verschlusselement 3 jeweils an dem am Aufnahmeelement 11 ausgebildeten Dichtsitz 6 mit dem Dichtsitzdurchmesser d1 an. Der sich zwischen dem ersten Fluidanschluss 2a und dem zweiten Fluidanschluss 2b erstreckende Strömungspfad ist geschlossen.

Das Verschlusselement 3 ist geometrisch derart ausgebildet, dass der Primärsegmentdurchmesser d2, der Dichtsitzdurchmesser d1, ein erster Außendurchmesser d3 des Niveaus des Saugdrucks zum Niveau des Gegendrucks und ein zweiter Außendurchmesser d4 des Niveaus des Gegendrucks zum Niveau des Umgebungsdrucks derart konfiguriert sind, dass eine resultierende Kraft abhängig von den jeweils anliegenden Drücken auf das Verschlusselement 3 einwirkt und damit den Steuerstrom des Fluids vom zweiten Fluidanschluss 2b zum ersten Fluidanschluss 2a steuert. Durch ein Kräftegleichgewicht wird das Verschlusselement 3 jeweils in die entsprechende Position verbracht. Der Primärsegmentdurchmesser d2 und die Außendurchmesser d3, d4 des Verschlusselements 3 sind jeweils derart konfiguriert, dass das sich einstellende Niveau des Gegendrucks insbesondere dem benötigten Andruck einer orbitierenden Spirale an eine feststehende Spirale eines Verdichtungsmechanismus eines Scrollverdichters als eine Vorrichtung zum Verdichten eines gasförmigen Fluids genügt.

Die Vorrichtung 1 ist gemäß der Fig. 2 und 3 zudem mit der ersten Fluidverbindung 7 ausgebildet, welche sich vom ersten Fluidanschluss 2a bis zu einem vom Verschlusselement 3, insbesondere einer Wirkfläche mit dem ersten Außendurchmesser d3 des Niveaus des Gegendrucks zum Niveau des Saugdrucks, und dem Gehäuse 2 umschlossenen Volumen erstreckt, um das Niveau des Gegendrucks entsprechend in das Kräftegleichgewicht am Verschlusselement 3 einzubeziehen. Zudem ist die zweite Fluidverbindung 8 vorgesehen, welche den ersten Fluidanschluss 2a mit dem dritten Fluidanschluss 2c verbindet und sich zwischen dem ersten Fluidanschluss 2a und einem vom Verschlusselement 3, insbesondere einer Wirkfläche mit dem ersten Außendurchmesser d3 des Niveaus des Saugdrucks zum Niveau des Gegendrucks, und dem Gehäuse 2 umschlossenen Volumen erstreckt. Innerhalb der zweiten Fluidverbindung 8 ist das Expansionselement 9 angeordnet.

Das vom Verschlusselement 3, insbesondere der zweiten Stirnseite mit der Wirkfläche mit dem zweiten Außendurchmesser d4 und dem Gehäuse 2 umschlossene sowie mit dem vierten Fluidanschluss 2d verbundene und damit mit Niveau des Umgebungsdrucks beaufschlagte Volumen dient dem Reduzieren der Wirkfläche des in Schließstellung des Verschlusselements 3 wirkenden Gegendrucks.

An der ersten Stirnseite des Verschlusselements 3 wirkt zudem entgegen der Schließstellung des Verschlusselements 3 das im zweiten Fluidanschluss 2b vorherrschende Niveau des Hochdrucks und das am Dichtsitz 6 durch zwischen dem Verschlusselement 3 und dem Aufnahmeelement 11 ausgebildeten Dichtspalt vorherrschende reduzierte Niveau des Gegendrucks.

Die als O-Ringe ausgebildeten ersten Dichtelemente 10-1 bilden jeweils eine fluiddichte und druckdichte Barriere zwischen dem mit Niveau des Umgebungsdrucks und Niveau des Gegendrucks beaufschlagten Volumina sowie zwischen dem mit Niveau des Gegendrucks und Niveau des Saugdrucks beaufschlagten Volumina, während das als O-Ring ausgebildete zweite Dichtelement 10-2 eine fluiddichte und druckdichte Barriere zwischen dem mit Niveau des Saugdrucks beaufschlagten Volumen und dem ersten Fluidanschluss 2a bildet. Damit ist lediglich das zwischen den mit Niveau des Umgebungsdrucks und Niveau des Gegendrucks beaufschlagten Volumina vorgesehene erste Dichtelement 10-1 als Abdichtung der Vorrichtung 1 zur Umgebung ausgebildet.

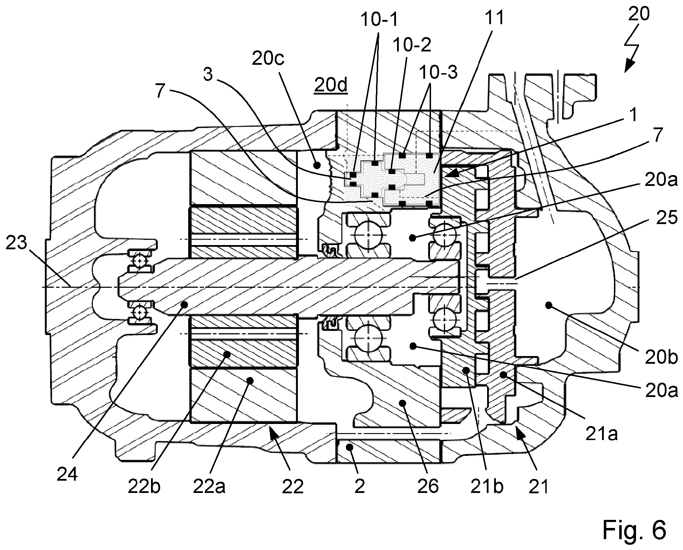

In Fig. 6 ist eine Vorrichtung zum Verdichten eines gasförmigen Fluids, insbesondere ein elektrisch angetriebener Verdichter 20, speziell ein Scrollverdichter, mit integrierter Vorrichtung 1 zum Steuern eines Fluidmassenstroms als Steuerstrom in einer seitlichen Schnittdarstellung gezeigt. Der Verdichter 20 ist mit einem Verdichtungsmechanismus 21 und einem Elektromotor 22 zum Antreiben des Verdichtungsmechanismus 21 ausgebildet.

Der mit einer feststehenden Spirale 21a und einer orbitierenden Spirale 21b ausgebildete Verdichtungsmechanismus 21 sowie der Elektromotor 22 sind innerhalb eines vom Gehäuse 2 umschlossenen Volumens angeordnet. Dabei ist das Gehäuse 2 aus Gehäuseelementen, insbesondere zur Aufnahme des Verdichtungsmechanismus 21 und zur Aufnahme des Elektromotors 22 sowie vorzugsweise aus einem Metall, beispielsweise aus einem Aluminium, ausgebildet.

Der Elektromotor 22 weist einen Stator 22a mit einem im Wesentlichen hohlzylinderförmigen Statorkern und auf dem Statorkern aufgewickelte Spulen sowie einen innerhalb des Stators 22a angeordneten Rotor 22b auf. Der Rotor 22b wird in eine Rotationsbewegung versetzt, wenn den Spulen des Stators 22a elektrische Energie zugeführt wird. Der Rotor 22b ist koaxial innerhalb des Stators 22a und um eine Rotationsachse 23 drehbar angeordnet. Eine Antriebswelle 24 kann integral mit dem Rotor 22b oder als ein separates Element ausgebildet sein.

Die orbitierende Spirale 21b des Verdichtungsmechanismus 21, in welchem das gasförmige Fluid, speziell ein Kältemittel, verdichtet wird, wird über die mit dem Rotor 22b des Elektromotors 22 verbundene Antriebswelle 24 angetrieben. Das beim Durchströmen des Verdichtungsmechanismus 21 auf das Niveau des Hochdrucks verdichtete Fluid wird durch mindestens einen Auslass 25 aus dem Verdichtungsmechanismus 21 in einen Bereich des Niveaus des Hochdrucks 20b des Verdichters 20 ausgelassen.

Der Verdichter 20 weist zudem eine innerhalb des Gehäuses 2 angeordnete und fest mit dem Gehäuse 2 verbundene Wandung auf, welche als Begrenzung eines Bereichs des Niveaus des Gegendrucks 20a des Verdichters 20, auch als Gegendruckbereich bekannt, ausgebildet ist und folglich auch als Gegenwandung 26 bezeichnet wird. Innerhalb des zwischen der Gegenwandung 26 und der orbitierenden Spirale 21b, insbesondere einer Rückseite einer Grundplatte der orbitierenden Spirale 21b, ausgebildeten Bereichs des Niveaus des Gegendrucks 20a liegt das Fluid auf dem Niveau des Gegendrucks vor, welches auch als Niveau des Anpressdrucks als ein Zwischendruck zwischen den Niveaus des Hochdrucks als Auslassdruck und des Niederdrucks als Saugdruck des Verdichters 20 liegt. Dabei weist das Fluid in einem Bereich des Niveaus des Niederdrucks 20c des Verdichters 20, in welchem auch der Elektromotor 22 angeordnet ist, das Niveau des Niederdrucks auf. Außerhalb des Gehäuses 2 des Verdichters 20 herrscht der Umgebungsdruck, sodass die Umgebung auch als Bereich des Niveaus des Umgebungsdrucks 20d des Verdichters 20 bezeichnet wird.

Die Vorrichtung 1 zum Steuern eines Fluidmassenstroms ist vorzugsweise innerhalb einer Kavität des Gehäuses 2 der Vorrichtung zum Verdichten eines gasförmigen Fluids, insbesondere des Verdichters 20, integriert. Dabei sind zwischen dem Verschlusselement 3 und dem Gehäuse 2 die ersten Dichtelemente 10-1 sowie zwischen dem Verschlusselement 3 und dem Aufnahmeelement 11 das zweite Dichtelement 10-2 angeordnet, während zwischen dem Aufnahmeelement 11 und dem Gehäuse 2 ausgebildete Druckräume mit den als O-Ringen ausgebildeten dritten Dichtelementen 10-3 zueinander abgedichtet sind. Das Aufnahmeelement 11 des Verschlusselements 3 der Vorrichtung 1 ist über die dritten Dichtelemente 10-3 zum Gehäuse 2 abgedichtet. Dabei bilden die dritten Dichtelemente 10-3 jeweils eine fluiddichte und druckdichte Barriere zwischen mit Niveau des Saugdrucks und Niveau des Hochdrucks beaufschlagten Volumina, insbesondere zwischen dem Bereich des Niveaus des Niederdrucks 20c und dem Bereich des Niveaus des Hochdrucks 20b des Verdichters 20, sowie zwischen mit Niveau des Hochdrucks und Niveau des Gegendrucks beaufschlagten Volumina, insbesondere zwischen dem Bereich des Niveaus des Hochdrucks 20b und dem Bereich des Niveaus des Gegendrucks 20a des Verdichters 20. Über die erste Fluidverbindung 7 sind jeweils die Bereiche des Niveaus des Gegendrucks 20a miteinander verbunden.

### LISTE DER BEZUGSZEICHEN

- 1, 1': Vorrichtung
- 2, 2': Gehäuse
- 2a, 2a': erster Fluidanschluss auf Niveau des Gegendrucks
- 2b, 2b': zweiter Fluidanschluss auf Niveau des Hochdrucks
- 2c, 2c': dritter Fluidanschluss auf Niveau des Niederdrucks/Saugdrucks
- 2d, 2d': vierter Fluidanschluss auf Niveau des Umgebungsdrucks
- 3, 3': Verschlusselement
- 3a: Längsachse
- 3-1, 3-1': Primärsegment des Verschlusselements 3, 3'
- 3-2: Sekundärsegment des Verschlusselements 3
- 4': Membrandichtelement
- 5': Federelement
- 6: Dichtsitz
- 7: erste Fluidverbindung
- 8: zweite Fluidverbindung
- 9: Expansionselement
- 10-1: erstes Dichtelement
- 10-2: zweites Dichtelement
- 10-3: drittes Dichtelement
- 10': Dichtelement
- 11: Aufnahmeelement
- 20: Verdichter
- 20a: Bereich des Niveaus des Gegendrucks
- 20b: Bereich des Niveaus des Hochdrucks
- 20c: Bereich des Niveaus des Niederdrucks/Saugdrucks
- 20d: Bereich des Niveaus des Umgebungsdrucks
- 21: Verdichtungsmechanismus
- 21a: feststehende Spirale
- 21b: orbitierende Spirale
- 22: Elektromotor
- 22a: Stator
- 22b: Rotor
- 23: Rotationsachse
- 24: Antriebswelle
- 25: Auslass
- 26: Gegenwandung

- d1: Dichtsitzdurchmesser
- d2: Primärsegmentdurchmesser
- d3: erster Außendurchmesser
- d3': erster Wirkdurchmesser
- d4: zweiter Außendurchmesser
- d4': zweiter Wirkdurchmesser

## Patentansprüche

1. Vorrichtung (1) zum Steuern eines Fluidmassenstroms für eine Vorrichtung zum Verdichten eines gasförmigen Fluids von einem Niveau eines Niederdrucks auf ein Niveau eines Hochdrucks, aufweisend ein Gehäuse (2) mit auf unterschiedlichen Druckniveaus beaufschlagten Fluidanschlüssen (2a, 2b, 2c, 2d) und ein innerhalb des Gehäuses (2) entlang einer Längsachse (3a) translatorisch bewegbar angeordnetes Verschlusselement (3) mit den Fluidanschlüssen (2a, 2b, 2c, 2d) zugeordneten Wirkflächen, wobei das Verschlusselement (3) zylinderförmig, insbesondere kreiszylinderförmig, mit Abschnitten unterschiedlicher Außendurchmesser derart ausgebildet ist, einen Strömungsquerschnitt eines sich zwischen einem ersten Fluidanschluss (2a) und einem zweiten Fluidanschluss (2b) erstreckend ausgebildeten Strömungspfades zu regeln, wobei die Vorrichtung (1) ein Aufnahmeelement (11) zur Aufnahme des Verschlusselements (3) aufweist, wobei
- das Verschlusselement (3) an einer ersten Stirnseite mit dem Aufnahmeelement (11) einen Dichtsitz (6) ausbildet und ein vom Gehäuse (2) und einer zur ersten Stirnseite distalen zweiten Stirnseite des Verschlusselements (3) begrenztes Volumen mit einem Niveau des Umgebungsdrucks beaufschlagt und über einen Fluidanschluss (2d) des Gehäuses (2) mit der Umgebung verbunden ausgebildet ist,
- ein Primärsegment (3-1) als ein erster Abschnitt des Verschlusselements (3) vom Aufnahmeelement (11) und ein Sekundärsegment (3-2) als ein zweiter Abschnitt des Verschlusselements (3) vom Gehäuse (2) sowie das Aufnahmeelement (11) vom Gehäuse (2) jeweils vollumfänglich umschlossen angeordnet sind, wobei das Sekundärsegment (3-2) des Verschlusselements (3) über mindestens ein erstes Dichtelement (10-1) zum Gehäuse (2) und das Primärsegment (3-1) des Verschlusselements (3) über mindestens ein zweites Dichtelement (10-2) zum Aufnahmeelement (11) sowie das Aufnahmeelement (11) über mindestens ein drittes Dichtelement (10-3) zum Gehäuse (2) jeweils fluiddicht und druckdicht abgedichtet sind.

2. Vorrichtung (1) nach Anspruch 1, **dadurch gekennzeichnet, dass** das Verschlusselement (3) mit dem Primärsegment (3-1) und dem Sekundärsegment (3-2) einstückig ausgebildet ist.

3. Vorrichtung (1) nach Anspruch 1 oder 2, **dadurch gekennzeichnet, dass** die Dichtelemente (10-1, 10-2, 10-3) jeweils als eine O-Ring-Dichtung ausgebildet sind.

4. Vorrichtung (1) nach einem der Ansprüche 1 bis 3, **dadurch gekennzeichnet, dass** der erste Fluidanschluss (2a) des Gehäuses (2) mit dem Fluid auf einem Niveau eines Gegendrucks und der zweite Fluidanschluss (2b) des Gehäuses (2) mit dem Fluid auf dem Niveau des Hochdrucks beaufschlagt ausgebildet sind.

5. Vorrichtung (1) nach einem der Ansprüche 1 bis 4, **dadurch gekennzeichnet, dass** ein dritter Fluidanschluss (2c) des Gehäuses (2) mit dem Fluid auf dem Niveau des Niederdrucks beaufschlagt ausgebildet ist.

6. Vorrichtung (1) nach einem der Ansprüche 1 bis 5, **dadurch gekennzeichnet, dass** ein vierter Fluidanschluss (2d) des Gehäuses (2) mit einem Niveau des Umgebungsdrucks beaufschlagt ausgebildet ist.

7. Vorrichtung (1) nach einem der Ansprüche 1 bis 6, **dadurch gekennzeichnet, dass** das Primärsegment (3-1) des Verschlusselements (3) mit einem Primärsegmentdurchmesser (d2) und das Sekundärsegment (3-2) des Verschlusselements (3) mit mindestens zwei Abschnitten mit jeweils unterschiedlichen Außendurchmessern (d3, d4) ausgebildet sind.

8. Vorrichtung (1) nach Anspruch 7, **dadurch gekennzeichnet, dass** ein von dem Gehäuse (2), dem Aufnahmeelement (11) und dem Verschlusselement (3) mit einer kreisringförmigen Wirkfläche mit einem ersten Außendurchmesser (d3) des Verschlusselements (3) und dem Primärsegmentdurchmesser (d2) des Verschlusselements (3) als Innendurchmesser begrenztes Volumen mit dem Fluid auf dem Niveau des Niederdrucks beaufschlagt und mit einem dritten Fluidanschluss (2c) des Gehäuses (2) verbunden ausgebildet ist.

9. Vorrichtung (1) nach Anspruch 7 oder 8, **dadurch gekennzeichnet, dass** ein von dem Gehäuse (2) und dem Verschlusselement (3) mit einer kreisringförmigen Wirkfläche mit einem ersten Außendurchmesser (d3) des Verschlusselements (3) und einem zweiten Außendurchmesser (d4) des Verschlusselements (3) als Innendurchmesser begrenztes Volumen mit dem Fluid auf dem Niveau des Gegendrucks beaufschlagt und mit dem ersten Fluidanschluss (2a) des Gehäuses (2) verbunden ausgebildet ist.

10. Vorrichtung (1) nach Anspruch 9, **dadurch gekennzeichnet, dass** eine erste Fluidverbindung (7) ausgebildet ist, welche sich vom ersten Fluidanschluss (2a) bis zum von dem Gehäuse (2) und dem Verschlusselement (3) mit der kreisringförmigen Wirkfläche mit dem ersten Außendurchmesser (d3) des Verschlusselements (3) und dem zweiten Außendurchmesser (d4) des Verschlusselements (3) als Innendurchmesser begrenzten Volumen erstreckt.

11. Vorrichtung (1) nach einem der Ansprüche 8 bis 10, **dadurch gekennzeichnet, dass** eine zweite Fluidverbindung (8) ausgebildet ist, welche sich vom ersten Fluidanschluss (2a) zum von dem Gehäuse (2) und dem Verschlusselement (3) mit der kreisringförmigen Wirkfläche mit dem ersten Außendurchmesser (d3) des Verschlusselements (3) und dem Primärsegmentdurchmesser (d2) des Verschlusselements (3) als Innendurchmesser begrenzten Volumen erstreckt.

12. Vorrichtung (1) nach Anspruch 11, **dadurch gekennzeichnet, dass** innerhalb der zweiten Fluidverbindung (8) ein Expansionselement (9), insbesondere ein Drosselorgan, angeordnet ist.

13. Vorrichtung zum Verdichten eines gasförmigen Fluids von einem Niveau eines Niederdrucks auf ein Niveau eines Hochdrucks, insbesondere ein Verdichter (20), speziell ein Scrollverdichter, aufweisend ein Gehäuse (2) mit einer Gegenwandung (26) und einen Verdichtungsmechanismus (21) mit einer unbeweglichen, feststehenden Spirale (21a) sowie einer über einen Exzenterantrieb angetriebenen beweglichen, orbitierenden Spirale (21b), wobei das Gehäuse (2) mit der Gegenwandung (26) und die orbitierende Spirale (21b) eine Gegendruckkammer zumindest bereichsweise umschließend ausgebildet sind und ein sich vom Hochdruckbereich zur Gegendruckkammer erstreckender Strömungspfad ausgebildet ist, **dadurch gekennzeichnet, dass** innerhalb des sich zwischen dem Hochdruckbereich und der Gegendruckkammer erstreckenden Strömungspfades eine Vorrichtung (1) zum Steuern eines Fluidmassenstroms nach einem der Ansprüche 1 bis 12 ausgebildet ist.

14. Verwendung einer Vorrichtung zum Verdichten eines gasförmigen Fluids mit der Vorrichtung (1) zum Steuern eines Fluidmassenstroms nach Anspruch 13 in einem Kältemittelkreislauf eines Klimatisierungssystems eines Kraftfahrzeugs.

## Claims

1. A device (1) for controlling a fluid mass flow for a device for compressing a gaseous fluid from a low pressure level to a high pressure level, having a housing (2) with fluid connections (2a, 2b, 2c, 2d) acted upon at different pressure levels and a closure element (3) which is arranged such that it can be moved in a translatory manner within the housing (2) along a longitudinal axis (3a), with effective surfaces assigned to the fluid connections (2a, 2b, 2c, 2d), wherein the closure element (3) is formed to be cylindrical, in particular circular cylindrical, with sections of different outer diameters such as to regulate a flow cross-section of a flow path formed such that it extends between a first fluid connection (2a) and a second fluid connection (2b), wherein the device (1) has a receiving element (11) for receiving the closure element (3), wherein
- the closure element (3) forms a sealing seat (6) with the receiving element (11) on a first end face and a volume delimited by the housing (2) and a second end face of the closure element (3) which is distal to the first end face is acted upon by a level of the ambient pressure and is formed to be connected to the environment via a fluid connection (2d) of the housing (2),
- a primary segment (3-1) is arranged to be completely surrounded by the receiving element (11) as a first section of the closure element (3), and a secondary segment (3-2) is arranged to be completely surrounded by the housing (2) as a second section of the closure element (3) and the receiving element (11) is arranged to be completely surrounded by the housing (2), wherein the secondary segment (3-2) of the closure element (3) is sealed to the housing (2) via at least one first sealing element (10-1) and the primary segment (3-1) of the closure element (3) is sealed to the sealing element (11) via at least one second sealing element (10-2) as well as the receiving element (11) is sealed to the housing (2) via at least one third sealing element (10-3), respectively in a fluid-tight and pressure-tight manner.

2. The device (1) according to claim 1, **characterised in that** the closure element (3) is formed integrally with the primary segment (3-1) and the secondary segment (3-2).

3. The device (1) according to claim 1 or 2, **characterised in that** the sealing elements (10-1, 10-2, 10-3) are each formed as an O-ring seal.

4. The device (1) according to any one of claims 1 to 3, **characterised in that** the first fluid connection (2a) of the housing (2) is formed to be acted upon with the fluid at a level of a counter pressure and the second fluid connection (2b) of the housing (2) is formed to be acted upon with the fluid at the level of the high pressure.

5. The device (1) according to any one of claims 1 to 4, **characterised in that** a third fluid connection (2c) of the housing (2) is formed to be acted upon by the fluid at the level of the low pressure.

6. The device (1) according to any one of claims 1 to 5, **characterised in that** a fourth fluid connection (2d) of the housing (2) is formed to be acted upon by a level of the ambient pressure.

7. The device (1) according to any one of claims 1 to 6, **characterised in that** the primary segment (3-1) of the closure element (3) is formed with a primary segment diameter (d2) and the secondary segment (3-2) of the closure element (3) is formed with at least two sections with respective different outer diameters (d3, d4).

8. The device (1) according to claim 7, **characterised in that** a volume, which is delimited by the housing (2), the receiving element (11) and the closure element (3) with an annular effective surface with a first outer diameter (d3) of the closure element (3) and the primary segment diameter (d2) of the closure element (3) as an inner diameter, is acted upon by the fluid at the low pressure level and is formed to be connected to a third fluid connection (2c) of the housing (2).

9. The device (1) according to claim 7 or 8, **characterised in that** a volume, which is delimited by the housing (2) and the closure element (3) with an annular effective surface with a first outer diameter (d3) of the closure element (3) and a second outer diameter (d4) of the closure element (3) as an inner diameter, is acted upon by the fluid at the counter pressure level and is formed to be connected to the first fluid connection (2a) of the housing (2).

10. The device (1) according to claim 9, **characterised in that** a first fluid connection (7) is formed, which extends from the first fluid connection (2a) to the volume delimited by the housing (2) and the closure element (3) with the annular effective surface with the first outer diameter (d3) of the closure element (3) and the second outer diameter (d4) of the closure element (3) as an inner diameter.

11. The device (1) according to any one of claims 8 to 10, **characterised in that** a second fluid connection (8) is formed, which extends from the first fluid connection (2a) to the volume delimited by the housing (2) and the closure element (3) with the annular effective surface with the first outer diameter (d3) of the closure element (3) and the primary segment diameter (d2) of the closure element (3) as an inner diameter.

12. The device (1) according to claim 11, **characterised in that** an expansion element (9), in particular a throttle member, is arranged within the second fluid connection (8).

13. The device for compressing a gaseous fluid from a low pressure level to a high pressure level, in particular a compressor (20), especially a scroll compressor, having a housing (2) with a counter wall (26) and a compression mechanism (21) with an immobile, fixed spiral (21a) and a movable, orbiting spiral (21b) driven via an eccentric drive, wherein the housing (2) with the counter wall (26) and the orbiting spiral (21b) are formed to enclose a counter pressure chamber at least in regions and a flow path extending from the high pressure region to the counter pressure chamber is formed, **characterised in that** a device (1) for controlling a fluid mass flow according to any one of claims 1 to 12 is formed within the flow path extending between the high pressure region and the counter pressure chamber.

14. Use of a device for compressing a gaseous fluid with the device (1) for controlling a fluid mass flow according to claim 13 in a refrigerant circuit of an air-conditioning system of a motor vehicle.

## Revendications

1. Dispositif (1) destiné à réguler un débit massique de fluide pour un dispositif destiné à comprimer un fluide gazeux pour le faire passer d'un niveau de basse pression à un niveau de haute pression, ledit dispositif présentant un carter (2) pourvu de raccords de fluide (2a, 2b, 2c, 2d) soumis à des niveaux de pression différents et un élément d'obturation (3) disposé à l'intérieur du carter (2) de manière à pouvoir se déplacer en translation le long d'un axe longitudinal (3a) et pourvu de surfaces actives affectées auxdits raccords de fluide (2a, 2b, 2c, 2d), l'élément d'obturation (3) étant réalisé en forme de cylindre, en particulier en forme de cylindre circulaire, avec des parties de diamètres extérieurs différents de manière à réguler la section transversale d'écoulement d'un trajet d'écoulement s'étendant entre un premier raccord de fluide (2a) et un deuxième raccord de fluide (2b), ledit dispositif (1) présentant un élément de réception (11) destiné à recevoir l'élément obturation (3), dans lequel
- l'élément d'obturation (3) forme, sur une première face frontale, un siège d'étanchéité (6) avec l'élément de réception (11), soumet un volume qui est délimité par le carter (2) et par une deuxième face frontale de l'élément d'obturation (3) située de manière distale par rapport à ladite première face frontale à un niveau de pression ambiante, et est relié au milieu ambiant par l'intermédiaire d'un raccord de fluide (2d) du carter (2),
- un segment primaire (3-1) est, en tant que première partie de l'élément d'obturation (3), disposé de manière à être entièrement entouré par l'élément de réception (11), et un segment secondaire (3-2) est, en tant que deuxième partie de l'élément d'obturation (3), disposé de manière à être entièrement entouré par le carter (2), et l'élément de réception (11) est, quant à lui, disposé de manière à être entièrement entouré par ledit carter (2), le segment secondaire (3-2) de l'élément d'obturation (3) étant, par l'intermédiaire d'au moins un premier élément d'étanchéité (10-1) étanche aux fluides et à la pression par rapport au carter (2), et le segment primaire (3-1) de l'élément d'obturation (3) étant, par l'intermédiaire d'au moins un deuxième élément d'étanchéité (10-2), étanche aux fluides et à la pression par rapport à l'élément de réception (11), et l'élément de réception (11) étant, par l'intermédiaire d'au moins un troisième élément d'étanchéité (10-3), étanche aux fluides et à la pression par rapport audit carter (2).

2. Dispositif (1) selon la revendication 1, **caractérisé en ce que** l'élément d'obturation (3) est réalisé en une seule pièce avec le segment primaire (3-1) et le segment secondaire (3-2).

3. Dispositif (1) selon la revendication 1 ou 2, **caractérisé en ce que** les éléments d'étanchéité (10-1, 10-2, 10-3) sont, chacun, des joints toriques.

4. Dispositif (1) selon l'une quelconque des revendications 1 à 3, **caractérisé en ce que** le premier raccord de fluide (2a) du carter (2) est réalisé pour être soumis au fluide à un niveau de contre-pression et le deuxième raccord de fluide (2b) du carter (2) est réalisé pour être soumis au fluide au niveau de haute pression.

5. Dispositif (1) selon l'une quelconque des revendications 1 à 4, **caractérisé en ce qu'**un troisième raccord de fluide (2c) du carter (2) est réalisé pour être soumis au fluide au niveau de basse pression.

6. Dispositif (1) selon l'une quelconque des revendications 1 à 5, **caractérisé en ce qu'**un quatrième raccord de fluide (2d) du carter (2) est réalisé pour être soumis à un niveau de pression ambiante.

7. Dispositif (1) selon l'une quelconque des revendications 1 à 6, **caractérisé en ce que** le segment primaire (3-1) de élément d'obturation (3) est réalisé de manière à présenter un diamètre de segment primaire (d2) et le segment secondaire (3-2) de l'élément d'obturation (3) est réalisé de manière à présenter au moins deux parties avec, chacune, un diamètre extérieur différent (d3, d4).

8. Dispositif (1) selon la revendication 7, **caractérisé en ce qu'**un volume qui est délimité par le carter (2), l'élément de réception (11) et l'élément d'obturation (3) pourvu d'une surface active en forme d'anneau circulaire avec un premier diamètre extérieur (d3) de l'élément d'obturation (3) et avec le diamètre de segment primaire (d2) dudit élément d'obturation (3) en tant que diamètre intérieur est soumis au fluide au niveau de basse pression et est réalisé de manière à être relié à un troisième raccord de fluide (2c) du carter (2).

9. Dispositif (1) selon la revendication 7 ou 8, **caractérisé en ce qu'**un volume qui est délimité par le carter (2) et l'élément d'obturation (3) pourvu d'une surface active en forme d'anneau circulaire avec un premier diamètre extérieur (d3) de l'élément d'obturation (3) et avec un deuxième diamètre extérieur (d4) dudit élément d'obturation (3) en tant que diamètre intérieur est soumis au fluide au niveau de contre-pression et est réalisé de manière à être relié au premier raccord de fluide (2a) du carter (2).

10. Dispositif (1) selon la revendication 9, **caractérisé en ce qu'**une première liaison fluidique (7) est créée, laquelle s'étend depuis le premier raccord de fluide (2a) jusqu'au volume délimité par le carter (2) et l'élément d'obturation (3) pourvu de la surface active en forme d'anneau circulaire avec le premier diamètre extérieur (d3) de l'élément d'obturation (3) et avec le deuxième diamètre extérieur (d4) dudit élément d'obturation (3) en tant que diamètre intérieur.

11. Dispositif (1) selon l'une quelconque des revendications 8 à 10, **caractérisé en ce qu'**une deuxième liaison fluidique (8) est créée, laquelle s'étend depuis le premier raccord de fluide (2a) jusqu'au volume délimité par le carter (2) et l'élément d'obturation (3) pourvu de la surface active en forme d'anneau circulaire avec le premier diamètre extérieur (d3) de l'élément d'obturation (3) et avec le diamètre de segment primaire (d2) dudit élément d'obturation (3) en tant que diamètre intérieur.

12. Dispositif (1) selon la revendication 11, **caractérisé en ce qu'**un élément d'expansion (9), en particulier un organe d'étranglement, est disposé à l'intérieur de la deuxième liaison fluidique (8).

13. Dispositif destiné à comprimer un fluide gazeux pour le faire passer d'un niveau de basse pression à un niveau de haute pression, en particulier un compresseur (20), plus spécialement un compresseur à spirale, ledit dispositif présentant un carter (2) pourvu d'une contre-paroi (26) et un mécanisme de compression (21) pourvu d'une spirale immobile fixe (21a) ainsi que d'une spirale mobile, à mouvement orbital (21b), entraînée par un entraînement par excentrique, le carter (2) pourvu de la contre-paroi (26) et la spirale à mouvement orbital (21b) étant réalisés de manière à entourer, au moins dans certaines zones, une chambre de contre-pression, ce qui forme un trajet d'écoulement allant de la zone de haute pression vers la chambre de contre-pression, **caractérisé en ce qu'**un dispositif (1) destiné à réguler un débit massique de fluide selon l'une quelconque des revendications 1 à 12 est réalisé à l'intérieur dudit trajet d'écoulement s'étendant entre la zone de haute pression et la chambre de contre-pression.

14. Utilisation d'un dispositif de compression d'un fluide gazeux à l'aide du dispositif (1) de régulation d'un débit massique de fluide selon la revendication 13 dans un circuit de fluide frigorigène d'un système de climatisation d'un véhicule automobile.
